# EUROPEAN PATENT SPECIFICATION

(11) **EP 4 365 043 B1**
(45) Date of publication and mention of the grant of the patent: **09.04.2025**
(21) Application number: 23200008.3
(22) Date of filing: 27.09.2023
(51) Int. Cl.: B60W 30/02, B60W 30/14

(54) **STRADDLED VEHICLE**
GRÄTSCHSITZFAHRZEUG
VÉHICULE À SELLE

(30) Priority: 01.11.2022 JP 2022175255
(43) Date of publication of application: 08.05.2024
(73) Proprietor: Yamaha Hatsudoki Kabushiki Kaisha, Iwata-shi, Shizuoka-ken 438-8501 (JP)
(72) Inventor: NAKAMURA, Shota, 438-8501 Iwata-shi (JP); MURATA, Masaaki, 438-8501 Iwata-shi (JP); WATASE, Shingo, 438-8501 Iwata-shi (JP); MATSUHISA, Yasuhide, 438-8501 Iwata-shi (JP)
(74) Representative: Studio Torta S.p.A.

(56) References cited:
- DE-A1- 102011 082 692
- DE-A1- 102018 203 468
- US-A- 5 330 025

## Description

### Technical field

The present invention relates to a straddled vehicle including an electronically controlled suspension.

### Prior art

Conventionally, straddled vehicles that include, as a suspension, such as a front fork, a rear suspension, or the like, an electronically controlled suspension capable of adjusting a damping force and a spring reaction force by electronic control have been known. Also, straddled vehicles that include a radar device that detects front of a vehicle have been known. For example, Japanese Patent No. 6842568 describes a straddled vehicle including an electronically controlled suspension and a radar device.

Japanese Patent No. 6842568 describes control in which, when a brake is automatically actuated in order to avoid a collision with an obstacle in front of a vehicle, a spring reaction force of a front fork, a damping force of the front fork in a contraction direction, and a damping force of a rear suspension in an expansion direction are increased and a spring reaction force of the rear suspension is reduced. According to the control, before the brake is actuated, an operation of the front fork in the contraction direction becomes stiff and an operation of the rear suspension in the expansion direction becomes stiff. Therefore, when the brake is actuated, a vehicle body can be suppressed from becoming a front-down posture and pitching of the motorcycle is reduced.

Straddled vehicles that can execute cruise control have been known. For example, straddled vehicles that perform control in which following a preceding vehicle is caused while keeping a predetermined inter-vehicle distance from the preceding vehicle on a highway or the like have been known. Also, straddled vehicles that perform control in which traveling at a set constant speed is caused have been known. When executing the above-described controls, a straddled vehicle accelerates or decelerates as appropriate. At this time, pitching occurs and riding comfort is reduced in some cases.

In view of the foregoing, the present invention has been devised and it is therefore an object of the present invention to increase riding comfort of a straddled vehicle during cruise control.
DE-A-102018203468 discloses a straddled vehicle according to the preamble of claim 1.

### Description of the invention

A straddled vehicle according to the invention includes a vehicle body frame, a front wheel supported by the vehicle body frame, a rear wheel supported by the vehicle body frame, a front wheel brake that brakes the front wheel, a rear wheel brake that brakes the rear wheel, a drive source that is supported by the vehicle body frame and drives the rear wheel, an electronically controlled front suspension connected to the vehicle body frame and the front wheel, an electronically controlled rear suspension connected to the vehicle body frame and the rear wheel and a control device connected to the front wheel brake, the rear wheel brake, the drive source, the front suspension, and the rear suspension. The control device includes a traveling controller and a suspension controller. The traveling controller is configured to execute cruise control by controlling at least one of the front wheel brake, the rear wheel brake, and the drive source. The suspension controller is configured to, when the traveling controller accelerates or decelerates the straddled vehicle during the cruise control, control at least one of a damping force of the front suspension, a spring reaction force of the front suspension, a damping force of the rear suspension, and a spring reaction force of the rear suspension.

The straddled vehicle may further include a preceding vehicle detection device that is supported by the vehicle body frame and detects an inter-vehicle distance from a preceding vehicle. The control device may be connected to the preceding vehicle detection device. The traveling controller may be configured to execute cruise control in which the straddled vehicle is caused to follow the preceding vehicle while keeping a set inter-vehicle distance from the preceding vehicle by controlling at least one of the front wheel brake, the rear wheel brake, and the drive source, based on a detection value of the preceding vehicle detection device.

According to the straddled vehicle, during cruise control, at least one of the damping force of the front suspension, the spring reaction force of the front suspension, the damping force of the rear suspension, and the spring reaction force of the rear suspension is controlled in accordance with acceleration or deceleration of the straddled vehicle. Therefore, pitching during the cruise control can be suppressed. Accordingly, riding comfort can be increased.

According to the invention, the suspension controller is configured to, when the traveling controller accelerates the straddled vehicle during the cruise control, increase a damping force of the front suspension in an expansion direction and/or a damping force of the rear suspension in a contraction direction.

Thus, when the straddled vehicle accelerates during cruise control, an expansion operation of the front suspension and/or a contraction operation of the rear suspension becomes stiff. Therefore, a vehicle body can be suppressed from becoming a front-up posture at acceleration during the cruise control. Accordingly, riding comfort can be increased.

The suspension controller may be configured to, when the traveling controller accelerates the straddled vehicle during the cruise control, cause the damping force of the front suspension in the expansion direction and/or the damping force of the rear suspension in the contraction direction to increase as an acceleration of the straddled vehicle increases.

Thus, as degree of acceleration increases, a force that suppresses the vehicle body from becoming the front-up posture increases. Accordingly, the vehicle body can be preferably suppressed from becoming the front-up posture at acceleration during cruise control and riding comfort can be increased.

The traveling controller may be configured to calculate a target acceleration of the straddled vehicle, based on the inter-vehicle distance detected by the preceding vehicle detection device and, when the acceleration of the straddled vehicle is lower than the target acceleration, increase an output of the drive source. The suspension controller may be configured to increase the damping force of the front suspension in the expansion direction and/or the damping force of the rear suspension in the contraction direction in accordance with the target acceleration before the output of the drive source is increased.

Thus, when the straddled vehicle accelerates, the damping force of the front suspension in the expansion direction and/or the damping force of the rear suspension in the contraction direction increases prior to increase of the output of the drive source. Therefore, when the straddled vehicle accelerates, the vehicle body can be more effectively suppressed from becoming the front-up posture.

The control device may include a storage that stores a map defining a relationship between the target acceleration and the damping force of the front suspension in the expansion direction and/or the damping force of the rear suspension in the contraction direction. The suspension controller may be configured to increase the damping force of the front suspension in the expansion direction and/or the damping force of the rear suspension in the contraction direction, based on the map.

Thus, in increasing the damping force of the front suspension in the expansion direction and/or the damping force of the rear suspension in the contraction direction in accordance with the target acceleration, a load of and a time required for a calculation of the control device can be reduced. When the straddled vehicle accelerates, the damping force of the front suspension in the expansion direction and/or the damping force of the rear suspension in the contraction direction can be controlled in a short time.

According to the invention, the straddled vehicle further includes an accelerator operator that is supported by the vehicle body frame and is operated by a rider. The control device includes a suspension control prohibitor that prohibits control of the suspension controller when the accelerator operator is operated.

Thus, when the rider operates the accelerator operator, control of the suspension controller is prohibited. Control of the suspension controller can be disabled by an intension of the rider.

The suspension controller may be configured to, when the traveling controller accelerates the straddled vehicle during the cruise control, reduce the spring reaction force of the front suspension and/or increase the spring reaction force of the rear suspension.

Thus, when the straddled vehicle accelerates during cruise control, the expansion operation of the front suspension and/or the contraction operation of the rear suspension becomes stiff. Therefore, the vehicle body can be suppressed from becoming the front-up posture at acceleration during the cruise control. Accordingly, riding comfort can be increased.

The suspension controller may be configured to, when the traveling controller decelerates the straddled vehicle during the cruise control, increase the damping force of the front suspension in the contraction direction and/or the damping force of the rear suspension in the expansion direction.

Thus, when the straddled vehicle decelerates during cruise control, a contraction operation of the front suspension and/or an expansion operation of the rear suspension becomes stiff. Therefore, the vehicle body is suppressed from becoming the front-down posture at deceleration during cruise control. Accordingly, riding comfort can be increased.

The suspension controller may be configured to, when the traveling controller decelerates the straddled vehicle during the cruise control, cause the damping force of the front suspension in the contraction direction and/or the damping force of the rear suspension in the expansion direction to increase as a deceleration of the straddled vehicle increases.

Thus, as degree of deceleration increases, a force that suppresses the vehicle body from becoming the front-down posture increases. Accordingly, the vehicle body can be preferably suppressed from becoming the front-down posture at deceleration during cruise control and riding comfort can be increased.

The traveling controller may be configured to calculate a target deceleration of the straddled vehicle, based on the inter-vehicle distance detected by the preceding vehicle detection device and, when a deceleration of the straddled vehicle is lower than the target deceleration, execute a deceleration operation including at least one of increasing the braking force of the front wheel brake and/or the rear wheel brake and reducing the output of the drive source. The suspension controller may be configured to increase the damping force of the front suspension in the contraction direction and/or the damping force of the rear suspension in the expansion direction in accordance with the target deceleration before the deceleration operation is started.

Thus, prior to actuation of the front wheel brake and/or the rear wheel brake and/or reduction of the output of the drive source, the damping force of the front suspension in the contraction direction and/or the damping force of the rear suspension in the expansion direction are increased. Therefore, when the straddled vehicle decelerates, the vehicle body can be more effectively suppressed from becoming the front-down posture.

The control device may include a storage that stores a map defining a relationship between the target deceleration and the damping force of the front suspension in the contraction direction and/or the damping force of the rear suspension in the expansion direction. The suspension controller may be configured to increase the damping force of the front suspension in the contraction direction and/or the damping force of the rear suspension in the expansion direction, based on the map.

Thus, in increasing the damping force of the front suspension in the contraction direction and/or the damping force of the rear suspension in the expansion direction in accordance with the target deceleration, a load of and a time required for a calculation of the control device can be reduced. When the straddled vehicle decelerates, the damping force of the front suspension in the contraction direction and/or the damping force of the rear suspension in the expansion direction can be controlled in a short time.

The suspension controller may be configured to, when the traveling controller decelerates the straddled vehicle during the cruise control, increase the spring reaction force of the front suspension and/or reduce the spring reaction force of the rear suspension.

Thus, when the straddled vehicle decelerates during cruise control, a contraction operation of the front suspension and/or an expansion operation of the rear suspension becomes stiff. Therefore, the vehicle body is suppressed from becoming the front-down posture at deceleration during cruise control. Accordingly, riding comfort can be increased.

According to the present invention, riding comfort of a straddled vehicle during cruise control can be increased.

### Brief description of the drawings

FIG. 1 is a side view of a motorcycle according to an embodiment.
FIG. 2 is a diagram illustrating a configuration of a control system of a motorcycle.
FIG. 3 is a diagram illustrating a configuration of a front fork.
FIG. 4 is a diagram illustrating a configuration of a rear suspension.
FIG. 5 is a functional block diagram of a control device.
FIG. 6 is a flowchart of an example of control performed by a motorcycle.

### Embodiments of the invention

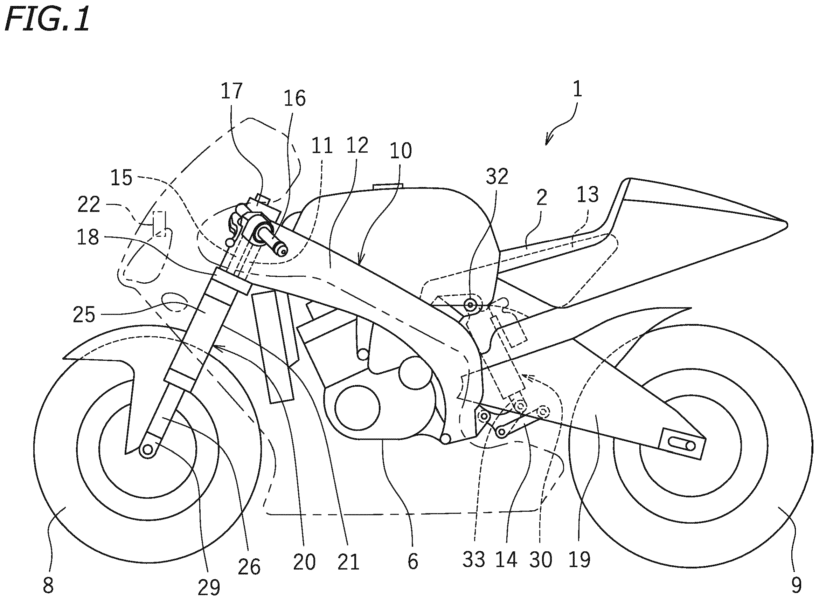

With reference to the attached drawings, one embodiment of a straddled vehicle will be described below. As illustrated in FIG. 1, a straddled vehicle according to this embodiment is a motorcycle 1.

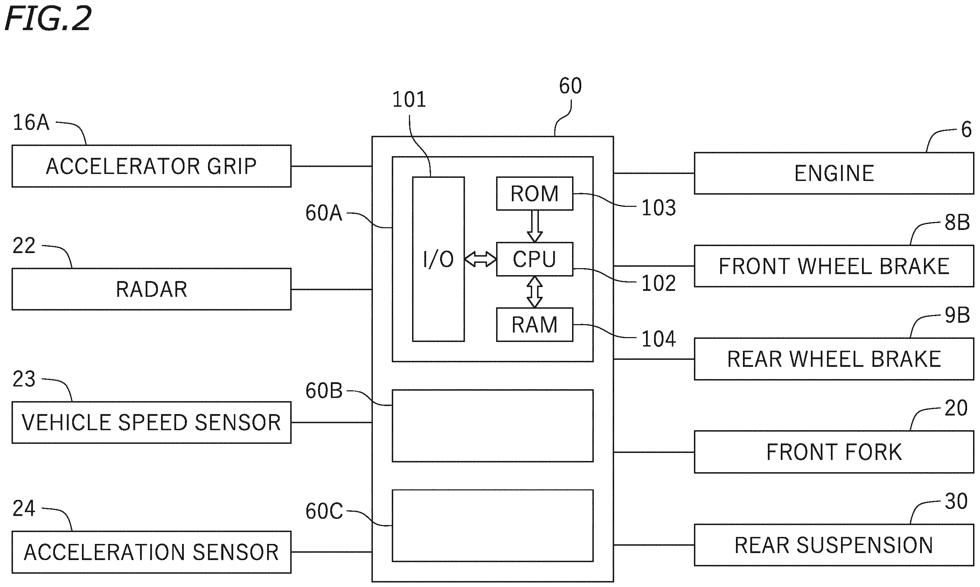

As illustrated in FIG. 1, the motorcycle 1 includes a vehicle body frame 10, a seat 2 supported by the vehicle body frame 10, an internal combustion engine (which will be hereinafter referred to as an engine) 6 supported by the vehicle body frame 10, a front wheel 8 and a rear wheel 9 supported by the vehicle body frame 10, an electronically controlled front fork 20 connected to the vehicle body frame 10 and the front wheel 8, an electronically controlled rear suspension 30 connected to the vehicle body frame 10 and the rear wheel 9, and a radar 22. As illustrated in FIG. 2, the motorcycle 1 includes an accelerator grip 16A that is an example of an accelerator operator, a vehicle speed sensor 23 that detects a speed of the motorcycle 1, an acceleration sensor 24 that detects an acceleration of the motorcycle 1, a front wheel brake 8B that brakes the front wheel 8, a rear wheel brake 9B that brakes the rear wheel 9, and a control device 60. The control device 60 is communicably connected to the accelerator grip 16A, the radar 22, the vehicle speed sensor 23, the acceleration sensor 24, the engine 6, the front wheel brake 8B, the rear wheel brake 9B, the front fork 20, and the rear suspension 30.

As illustrated in FIG. 1, the vehicle body frame 10 includes a head pipe 11, a main frame 12 extending rearward from the head pipe 11, and a seat frame 13 extending rearward from the main frame 12. The seat 2 is supported by the seat frame 13.

A steering shaft 15 is rotatably inserted in the head pipe 11. A handlebar 16 is mounted on an upper end portion of the steering shaft 15. Although not illustrated in FIG. 1, the accelerator grip 16A is rotatably mounted to a right end portion of the handlebar 16. An upper bracket 17 is fixed to the upper end portion of the steering shaft 15. An under bracket 18 is fixed to a lower end portion of the steering shaft 15.

The engine 6 is supported by the vehicle body frame 10. The engine 6 is an example of a drive source that drives the rear wheel 9. However, the drive source for traveling is not limited to the engine 6. The drive device may include an electric motor. The drive source may include both of an internal combustion engine and an electric motor.

The front wheel 8 is supported by the head pipe 11 of the vehicle body frame 10 via the front fork 20. The rear wheel 9 is supported by the main frame 12 of the vehicle body frame 10 via a rear arm 19. A front end portion of the rear arm 19 is rotatably connected to the main frame 12 via an unillustrated pivot shaft. A rear end portion of the rear arm 19 is connected to the rear wheel 9. The rear wheel 9 is connected to the engine 6 via a power transmission member (not illustrated), such as a chain of the like. The rear wheel 9 is a drive wheel and receives a driving force of the engine 6 to rotate.

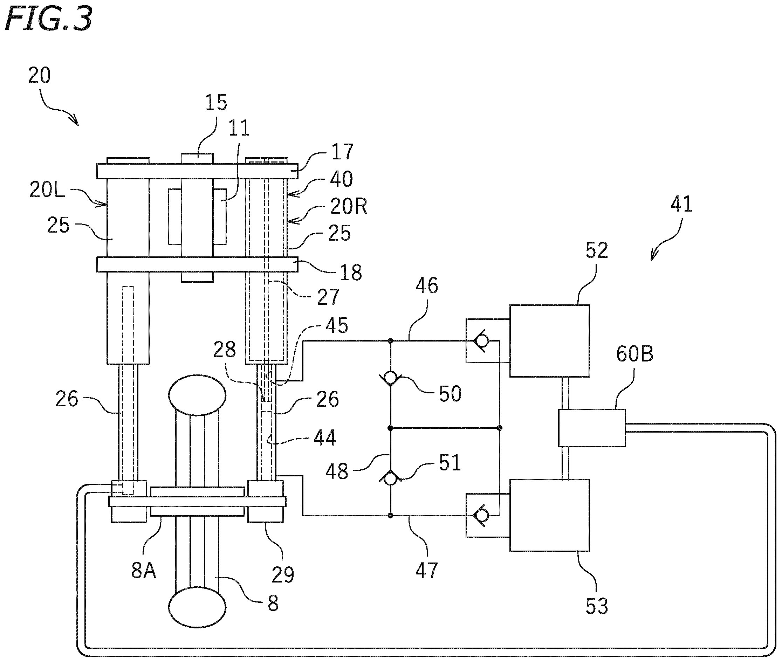

The front fork 20 is an example of an electronic controlled suspension. Note that the electronic controlled suspension is a suspension in which at least a damping force characteristic is adjusted by electronic control. Herein, the front fork 20 is configured such that both a damping force characteristic and a spring characteristic are adjustable by electronic control. As illustrated in FIG. 3, the front fork 20 is fixed to the upper bracket 17 and the under bracket 18. The front fork 20 includes a left tube 20L and a right tube 20R.

Each of the left tube 20L and the right tube 20R includes an outer tube 25 and an inner tube 26. The outer tube 25 is mounted to the upper bracket 17 and the under bracket 18. A lower end portion of the inner tube 26 is joined to an axle 8A of the front wheel 8 via an axle bracket 29. The inner tube 26 is slidably inserted inside the outer tube 25. The inner tube 26 slides against the outer tube 25, so that the front fork 20 expands and contracts. In this embodiment, when the inner tube 26 moves downward with respect to the outer tube 25, the front fork 20 expands. When the inner tube 26 moves upward with respect to the outer tube 25, the front fork 20 contracts. Downward and upward correspond to an expansion direction and a contraction direction of the front fork 20, respectively.

Although not illustrated, a fork spring is arranged inside each of the right tube 20R and the left tube 20L. The fork spring is an example of a spring of the front fork 20.

The right tube 20R includes an oil-type shock absorber 40 that is electronically controlled. The shock absorber 40 includes the inner tube 26, a rod 27, a piston 28, and a control valve assembly 41. The rod 27 is undisplaceably fixed to the outer tube 25. The piston 28 is connected to a lower end portion of the rod 27. The piston 28 is arranged inside the inner tube 26. An inner space of the inner tube 26 is partitioned into an oil chamber 44 and an oil chamber 45 by the piston 28.

The control valve assembly 41 is connected to the oil chamber 44 and the oil chamber 45. The control valve assembly 41 includes oil paths 46 to 48, check valves 50 and 51, and electronically controlled piston valves 52 and 53. The check valve 50 is arranged between the oil path 46 and the oil path 48. The check valve 50 allows a flow of oil from the oil path 48 to the oil path 46 and prohibits a flow of oil from the oil path 46 to the oil path 48. The check valve 51 is arranged between the oil path 47 and the oil path 48. The check valve 51 allows a flow of oil from the oil path 48 to the oil path 47 and prohibits a flow of oil from the oil path 47 to the oil path 48. The piston valve 52 connects the oil path 46 and the oil path 48. The piston valve 52 allows a flow of oil from the oil path 46 to the oil path 48 and prohibits a flow of oil from the oil path 48 to the oil path 46. The piston valve 53 connects the oil path 47 and the oil path 48. The piston valve 53 allows a flow of oil from the oil path 47 to the oil path 48 and prohibits a flow of oil from the oil path 48 to the oil path 47. Each of the piston valves 52 and 53 is constituted of, for example, a solenoid valve.

When oil flows through the piston valve 52, the oil receives a flow resistance. Degree of the flow resistance caused by the piston valve 52 is controlled by the control device 60 (specifically, a control unit 60B that will be described later). When the control device 60 increases the flow resistance of the piston valve 52, the oil receives more resistance as the oil flows from the oil path 46 to the oil path 48. Thus, the oil is difficult to flow from the oil chamber 45 to the oil chamber 44 through the control valve assembly 41, so that a damping force of the front fork 20 in the expansion direction is increased. Conversely, when the control device 60 reduces the flow resistance of the piston valve 52, the damping force of the front fork 20 in the expansion direction is reduced.

When the oil flows through the piston valve 53, the oil receives a flow resistance. Degree of the flow resistance caused by the piston valve 53 is controlled by the control device 60. When the control device 60 increases the flow resistance of the piston valve 53, the oil receives more resistance as the oil flows from the oil path 47 to the oil path 48. Thus, the oil is difficult to flow from the oil chamber 44 to the oil chamber 45 through the control valve assembly 41, so that a damping force of the front fork 20 in the contraction direction is increased. Conversely, when the control device 60 reduces the flow resistance of the piston valve 53, the damping force of the front fork 20 in the contraction direction is reduced.

As illustrated in FIG. 1, an upper end portion 32 of the rear suspension 30 is fixed to the main frame 12 via a bracket. A lower end portion 33 of the rear suspension 30 is connected to a joining member 14 fixed to the rear arm 19. The rear suspension 30 is indirectly connected to the vehicle body frame 10 and the rear wheel 9.

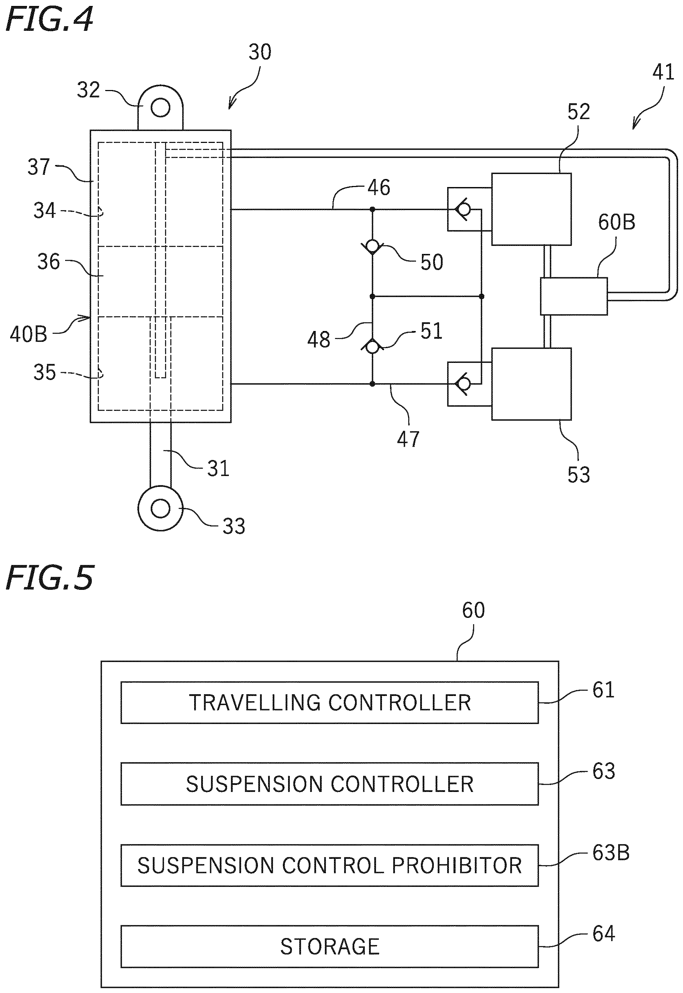

The rear suspension 30 is another example of the electronically controlled suspension. Herein, the rear suspension 30 is configured such that a damping force characteristic and a spring characteristic can be adjusted by electronic control. The rear suspension 30 includes an unillustrated spring. Moreover, as illustrated in FIG. 4, the rear suspension 30 includes an oil-type shock absorber 40B that is electronically controlled. The shock absorber 40B includes a cylinder 37, a piston 36 slidably arranged inside the cylinder 37, and a rod 31 extending from the piston 36. An internal space of the cylinder 37 is partitioned into an oil chamber 34 and an oil chamber 35 by the piston 36. When the piston 36 moves downward, the rear suspension 30 expands. When the piston 36 moves upward, the rear suspension 30 contracts. Downward and upward correspond to an expansion direction and a contraction direction of the rear suspension 30, respectively.

The rear suspension 30 includes a control valve assembly 41 that is similar to the control valve assembly 41 of the front fork 20. Each member that is similar to a corresponding member of the control valve assembly 41 of the front fork 20 will be denoted below by the same reference character as that of the corresponding member of the control valve assembly 41 and description thereof will be omitted. In the rear suspension 30, the oil path 46 of the control valve assembly 41 is connected to the oil chamber 34. The oil path 47 of the control valve assembly 41 is connected to the oil chamber 35.

When the control device 60 (specifically, the control unit 60B that will be described later) increases the flow resistance of the piston valve 52, the oil is difficult to flow from the oil chamber 34 to the oil chamber 35 through the control valve assembly 41, so that a damping force of the rear suspension 30 in the contraction direction is increased. Conversely, when the control device 60 reduces the flow resistance of the piston valve 52, the damping force of the rear suspension 30 in the contraction direction is reduced.

When the control device 60 increases the flow resistance of the piston valve 53, the oil is difficult to flow from the oil chamber 35 to the oil chamber 34 through the control valve assembly 41, so that a damping force of the rear suspension 30 in the expansion direction is increased. Conversely, when the control device 60 reduces the flow resistance of the piston valve 53, the damping force of the rear suspension 30 in the expansion direction is reduced.

The radar 22 (see FIG. 1) is an example of a preceding vehicle detection device that detects an inter-vehicle distance from a preceding vehicle (that is, another vehicle that travels in front of the motorcycle 1). The radar 22 transmits electromagnetic waves, such as millimeter waves or the like, toward front of the vehicle and receives their reflected waves. The radar 22 is supported by the vehicle body frame 10 and is installed in a front portion of the motorcycle 1. Note that, as the preceding vehicle detection device, a device that detects an inter-vehicle distance from a preceding vehicle is sufficient, and the preceding vehicle detection device is not limited to the radar 22. The preceding vehicle detection device may be constituted of a laser, a camera, or the like.

The control device 60 is constituted of one or two or more microcomputers. In this embodiment, as illustrated in FIG. 2, the control device 60 includes a plurality of control units. Specifically, the control device 60 includes a control unit 60A that controls the engine 6, a control unit 60B that controls the front fork 20 and the rear suspension 30, and a control unit 60C that controls the front wheel brake 8B and the rear wheel brake 9B. The control unit 60A includes an interface 101, a CPU 102, a ROM 103, a RAM 104, or the like. Although not illustrated, each of the control units 60B and 60C also includes an interface 101, a CPU 102, a ROM 103, a RAM 104, or the like. The control units 60A, 60B, and 60C are formed as separate bodies and are arranged in places apart from each other. The control units 60A, 60B, and 60C are communicably connected to each other. However, there is no limitation on a configuration of the control device 60. The control device 60 may be constituted of a single control unit.

As described above, the motorcycle 1 includes the vehicle speed sensor 23 that detects the speed of the motorcycle 1 and the acceleration sensor 24 that detects the acceleration of the motorcycle 1. The acceleration sensor 24 is constituted of, for example, an inertia measurement unit (IMU).

FIG. 5 is a functional block diagram of the control device 60. The CPU 102 of the control device 60 (see FIG. 2) executes computer programs stored in the ROM 103 or the like to function as a traveling controller 61 that executes cruise control, a suspension controller 63 that controls the front fork 20 and the rear suspension 30, and a suspension control prohibitor 63B that prohibits control of the suspension controller 63. Note that cruise control is control that causes traveling without an operation of the accelerator grip 16A by a rider. Cruise control includes control that causes the motorcycle 1 to follow a preceding vehicle while keeping a set inter-vehicle distance from the preceding vehicle. The ROM 103 or the RAM 104 of the control device 60 functions as a storage 64 that stores a map that will be described later. Note that the control device 60 may include, as the storage 64, some other memory than the ROM 103 and the RAM 104.

There is no particular limitation on a type of cruise control. Cruise control may be control in which the motorcycle 1 is caused to travel at a certain speed that has been set by the rider. Cruise control may be control in which the motorcycle 1 is caused to follow a preceding vehicle regardless of a speed of the preceding vehicle, and may be control in which the motorcycle 1 is caused to follow the preceding vehicle based on the speed of the preceding vehicle. In this embodiment, the traveling controller 61 can execute control (which will be hereinafter referred to as an adaptive cruise control) in which, when there is no preceding vehicle or when a speed of a preceding vehicle is higher than a preset speed (which will be hereinafter referred to as a set speed), the motorcycle 1 is caused to travel at the set speed and, when the speed of the preceding vehicle is lower than the set speed, the motorcycle 1 is caused to travel behind the preceding vehicle while keeping a preset inter-vehicle distance (which will be hereinafter referred to as a set distance) from the preceding vehicle. Note that the set distance may be a predetermined distance or may be a predetermined distance range. The set distance may vary in accordance with the speed of the motorcycle 1. For example, when the speed of the motorcycle 1 is relatively high, the set distance may be a relatively long distance, and when the speed of the motorcycle 1 is relatively low, the set distance may be a relatively short distance.

Although not illustrated, each of the front wheel brake 8B and the rear wheel brake 9B includes a hydraulic brake caliper. The traveling controller 61 controls a hydraulic pressure of the brake caliper to control on and off and a braking force of each of the front wheel brake 8B and the rear wheel brake 9B. During the adaptive cruise control, the traveling controller 61 controls the engine 6, the front wheel brake 8B, and the rear wheel brake 9B, based on at least the inter-vehicle distance detected by the radar 22. In this embodiment, the traveling controller 61 increases or reduces an output of the engine 6 or actuates the front wheel brake 8B and/or the rear wheel brake 9B, based on the inter-vehicle distance detected by the radar 22, the speed of the motorcycle 1 detected by the vehicle speed sensor 23, and the acceleration of the motorcycle 1 detected by the acceleration sensor 24. Note that an acceleration can be a positive value and a negative value. In the following, a negative acceleration will be also referred to as a deceleration.

During the adaptive cruise control, when the speed of the motorcycle 1 is equal to or lower than the set speed and the inter-vehicle distance is larger than the set distance, the traveling controller 61 increases the output of the engine 6. Thus, the motorcycle 1 accelerates and the inter-vehicle distance reduces. Conversely, during the adaptive cruise control, when the inter-vehicle distance is reduced to be smaller than the set distance, the traveling controller 61 reduces the output of the engine 6, and furthermore, actuates the front wheel brake 8B and/or the rear wheel brake 9B, as necessary. Thus, the motorcycle 1 decelerates and the inter-vehicle distance is increased. In a manner described above, the motorcycle 1 follows the preceding vehicle while keeping the inter-vehicle distance at the set distance.

The suspension controller 63 controls the damping force of the front fork 20, a spring reaction force of the front fork 20, the damping force of the rear suspension 30, and a spring reaction force of the rear suspension 30. When the damping force of the front fork 20 in the contraction direction is increased, a contraction operation of the front fork 20 becomes stiff and a posture of the vehicle body is less likely to change to a front-down posture. When the damping force of the rear suspension 30 in the expansion direction is increased, an expansion operation of the rear suspension 30 becomes stiff and the posture of the vehicle body is less likely to change to the front-down posture.

The spring reaction force of the front fork 20 is a reaction force to a force of the front fork 20 in the contraction direction. The spring reaction force of the rear suspension 30 is a reaction force to a force of the rear suspension 30 in the contraction direction. When the spring reaction force of the front fork 20 is increased, the front fork 20 is less likely to contract and the posture of the vehicle body is less likely to change to the front-down posture. When the spring reaction force of the rear suspension 30 is reduced, the rear suspension 30 is less likely to expand and the posture of the vehicle body is less likely to change to the front-down posture.

When the damping force of the front fork 20 in the expansion direction is increased, the expansion operation of the front fork 20 becomes stiff and the posture of the vehicle body is less likely to change to a front-up posture. When the damping force of the rear suspension 30 in the contract direction is increased, the contraction operation of the rear suspension 30 becomes stiff and the posture of the vehicle body is less likely to change to the front-up posture.

When the spring reaction force of the front fork 20 is reduced, the front fork 20 is less likely to expand and the posture of the vehicle body is less likely to change to the front-up posture. When the spring reaction of the rear suspension 30 is increased, the rear suspension 30 is less likely to contract and the posture of the vehicle body is less likely to change to the front-up posture.

The suspension control prohibitor 63B is configured to, when the rider operates the accelerator grip 16A, prohibit control of the suspension controller 63. The suspension control prohibitor 63B receives a signal from the accelerator grip 16A and determines whether the accelerator grip 16A is being operated. When the suspension control prohibitor 63B detects that the accelerator grip 16A is being operated, the suspension control prohibitor 63B transmits a signal to the suspension controller 63 to disable control of the suspension controller 63.

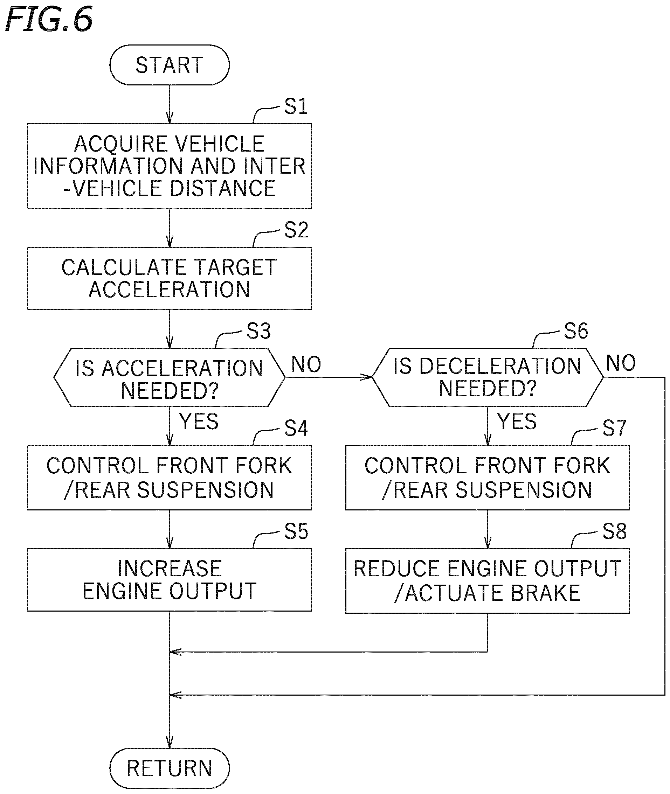

Next, with reference to a flowchart of FIG. 6, an example of adaptive cruise control performed by the motorcycle 1 will be described.

First, in Step S1, vehicle information and an inter-vehicle distance are acquired. The inter-vehicle distance is detected by the radar 22. The vehicle information is driving information of the motorcycle 1 as an own vehicle and driving information of a preceding vehicle (that is, another vehicle traveling in front of the motorcycle 1). In Step S1, the traveling controller 61 of the control device 60 acquires a speed and an acceleration of the motorcycle 1 and a speed and an acceleration of the preceding vehicle. Note that the speed and the acceleration of the preceding vehicle can be calculated based on the driving information of the motorcycle 1 and a detection value of the radar 22.

In Step S2, a target acceleration necessary for keeping the inter-vehicle distance from the preceding vehicle at a set distance as the motorcycle 1 travels at a speed equal to or lower than the set speed is calculated by the traveling controller 61. Note that, in the following, a negative target acceleration will be also referred to as a target deceleration.

Subsequently, the process proceeds to Step S3 and whether the motorcycle 1 needs to accelerate is determined. Specifically, the traveling controller 61 determines whether the target acceleration is higher than zero. For example, when the inter-vehicle distance is larger than the set distance, the motorcycle 1 needs to accelerate in order to reduce the inter-vehicle distance. In that case, the target acceleration is higher than zero.

When a determination result of Step S3 is YES, the process proceeds to Step S4 and the suspension controller 63 executes at least one of increasing the damping force of the front fork 20 in the expansion direction, reducing the spring reaction force of the front fork 20, increasing the damping force of the rear suspension 30 in the contraction direction, and increasing the spring reaction force of the rear suspension 30. In this case, the suspension controller 63 increases the damping force of the front fork 20 in the expansion direction and the damping force of the rear suspension 30 in the contraction direction. Thus, an expansion operation of the front fork 20 and a contraction operation of the rear suspension 30 become stiff and the vehicle body is less likely to change to the front-up posture at acceleration.

In this embodiment, the suspension controller 63 increases the damping force of the front fork 20 in the expansion direction and the damping force of the rear suspension 30 in the contraction direction in accordance with the target acceleration of the motorcycle 1. The suspension controller 63 causes the damping force of the front fork 20 in the expansion direction and the damping force of the rear suspension 30 in the contraction direction to increase as the acceleration of the motorcycle 1 increases. The storage 64 of the control device 60 stores a map defining a relationship between the target acceleration and each of the damping force of the front fork 20 in the expansion direction and the damping force of the rear suspension 30 in the contraction direction. The map is set such that, as the target acceleration increases, the damping force of the front fork 20 in the expansion direction and the damping force of the rear suspension 30 in the contraction direction increase. The suspension controller 63 controls the damping forces of the front fork 20 and the rear suspension 30, based on the map.

Thereafter, the process proceeds to Step S5 and the traveling controller 61 increases the output of the engine 6. As a result, the motorcycle 1 accelerates. At this time, the expansion operation of the front fork 20 and the contraction operation of the rear suspension 30 have become stiff due to processing of Step S4, and therefore, the vehicle body is suppressed from becoming the front-up posture. Accordingly, occurrence of pitching due to acceleration can be suppressed.

When the determination result of Step S3 is NO, the process proceeds to Step S6 and whether the motorcycle 1 needs to decelerate is determined. Specifically, the traveling controller 61 determines whether the target acceleration is lower than zero. For example, when the inter-vehicle distance is smaller than the set distance, the motorcycle 1 needs to decelerate in order to increase the inter-vehicle distance. In that case, the target acceleration is lower than zero.

When a determination result of Step S6 is YES, the process proceeds to Step S7 and the suspension controller 63 executes at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30. In this case, the suspension controller 63 increases the damping force of the front fork 20 in the contraction direction and the damping force of the rear suspension 30 in the expansion direction. Thus, the contraction operation of the front fork 20 and the expansion operation of the rear suspension 30 become stiff and the vehicle body is less likely to change to the front-down posture at deceleration.

In this embodiment, the suspension controller 63 increases the damping force of the front fork 20 in the contraction direction and the damping force of the rear suspension 30 in the expansion direction in accordance with the target acceleration of the motorcycle 1 (specifically, the target deceleration that is the negative target acceleration). The suspension controller 63 causes the damping force of the front fork 20 in the contraction direction and the damping force of the rear suspension 30 in the expansion direction to increase as the target acceleration of the motorcycle 1 reduces (in other words, as the target deceleration increases). The storage 64 of the control device 60 stores a map defining a relationship between the target deceleration and each of the damping force of the front fork 20 in the contraction direction and the damping force of the rear suspension 30 in the expansion direction. The map is set such that, as the target deceleration increases, the damping force of the front fork 20 in the contraction direction and the damping force of the rear suspension 30 in the expansion direction increase. The suspension controller 63 controls the damping forces of the front fork 20 and the rear suspension 30, based on the map.

Thereafter, the process proceeds to Step S8 and the traveling controller 61 reduces the output of the engine 6, and furthermore, actuates the front wheel brake 8B and/or the rear wheel brake 9B, as necessary. As a result, the motorcycle 1 decelerates. At this time, the contraction operation of the front fork 20 and the expansion operation of the rear suspension 30 have become stiff due to processing of Step S7, and therefore, the vehicle body is suppressed from becoming the front-down posture. Accordingly, occurrence of pitching due to deceleration can be suppressed.

Note that, during the above-described control, when the rider operates the accelerator grip 16A, the suspension control prohibitor 63B prohibits control of the suspension controller 63. In this case, the damping forces of the front fork 20 and the rear suspension 30 are not changed. In this embodiment, when the rider operates the accelerator grip 16A, adaptive cruise control is temporarily canceled. Accordingly, control of the front fork 20 and the rear suspension 30 by the suspension controller 63 is temporarily canceled. Note that, thereafter, when the rider stops operating the accelerator grip 16A, adaptive cruise control is restarted. Accordingly, control of the front fork 20 and the rear suspension 30 by the suspension controller 63 is restarted.

As has been described above, according to the motorcycle 1 of this embodiment, during the adaptive cruise control, at least one of the damping force of the front fork 20, the spring reaction force of the front fork 20, the damping force of the rear suspension 30, and the spring reaction force of the rear suspension 30 is controlled in accordance with acceleration or deceleration of the motorcycle 1. In the above-described control example, the suspension controller 63 of the control device 60 increases the damping force of the front fork 20 in the expansion direction and the damping force of the rear suspension 30 in the contraction direction when the motorcycle 1 accelerates during the adaptive cruise control. Therefore, when the motorcycle 1 accelerates, the vehicle body is suppressed from becoming the front-up posture. The suspension controller 63 increases the damping force of the front fork 20 in the contraction direction and the damping force of the rear suspension 30 in the expansion direction when the motorcycle 1 decelerates during the adaptive cruise control. Therefore, when the motorcycle 1 decelerates, the vehicle body is suppressed from becoming the front-down posture. According to this embodiment, during adaptive cruise control, pitching due to acceleration or deceleration can be suppressed, so that riding comfort during adaptive cruise control can be increased.

According to this embodiment, the suspension controller 63 causes the damping force of the front fork 20 in the expansion direction and the damping force of the rear suspension 30 in the contraction direction to increase as the acceleration of the motorcycle 1 increases when the motorcycle 1 accelerates during execution of adaptive cruise control. Stiffness in the expansion operation of the front fork 20 and the contraction operation of the rear suspension 30 is adjusted in accordance with the acceleration of the motorcycle 1. Accordingly, when the motorcycle 1 accelerates, the vehicle body can be preferably suppressed from becoming the front-up posture. The suspension controller 63 causes the damping force of the front fork 20 in the contraction direction and the damping force of the rear suspension 30 in the expansion direction to increase as the deceleration of the motorcycle 1 increases when the motorcycle 1 decelerates during execution of adaptive cruise control. Stiffness in the contraction operation of the front fork 20 and the expansion operation of the rear suspension 30 is adjusted in accordance with the deceleration of the motorcycle 1. Accordingly, when the motorcycle 1 decelerates, the vehicle body can be preferably suppressed from becoming the front-down posture. According to this embodiment, riding comfort during adaptive cruise control can be further increased.

Moreover, according to this embodiment, the suspension controller 63 increases the damping force of the front fork 20 in the expansion direction and the damping force of the rear suspension 30 in the contraction direction prior to increase of the output of the engine 6 when the motorcycle 1 accelerates. Therefore, the vehicle body can be more effectively suppressed from becoming the front-up posture. Also, the suspension controller 63 increases the damping force of the front fork 20 in the contraction direction and the damping force of the rear suspension 30 in the expansion direction prior to reduction of the output of the engine 6 or actuation of the front wheel brake 8B and/or the rear wheel brake 9B when the motorcycle 1 decelerates. Therefore, the vehicle body can be more effectively suppressed from becoming the front-down posture. Accordingly, riding comfort during adaptive cruise control can be further increased.

According to this embodiment, the suspension controller 63 controls the damping forces of the front fork 20 and the rear suspension 30, based on the map stored in the storage 64. Therefore, in controlling the damping forces of the front fork 20 and the rear suspension 30, a load of and a time required for a calculation of the control device 60 can be reduced. When the motorcycle 1 accelerates or decelerates, the damping forces of the front fork 20 and the rear suspension 30 can be adjusted in a short time.

According to this embodiment, when the rider operates the accelerator grip 16A, control of the suspension controller 63 is prohibited. Control of the suspension controller 63 can be disabled by an intension of the rider.

One embodiment of the straddled vehicle has been described above, but the above-described embodiment is merely an example. Various other embodiments are also possible.

The above-described control by the suspension controller 63 is merely an example. In Step S4 and/or Step S7 described above, the suspension controller 63 may be configured to perform control of the spring reaction force of the front fork 20 and/or the rear suspension 30, instead of or together with control of the damping forces of the front fork 20 and the rear suspension 30. The suspension controller 63 may be configured to, in Step S4, reduce the spring reaction force of the front fork 20 and/or increase the spring reaction force of the rear suspension 30. The suspension controller 63 may be configured to, in Step S7, increase the spring reaction force of the front fork 20 and/or reduce the spring reaction force of the rear suspension 30. The storage 64 may be configured to store a map defining a relationship between the target acceleration and each of the spring reaction force of the front fork 20 and the spring reaction force of the rear suspension 30. The suspension controller 63 may be configured to control the spring reaction force of the front fork 20 and/or the rear suspension 30, based on the map.

In the above-described embodiment, in Step S4 and Step S7, the suspension controller 63 changes both the damping force of the front fork 20 and the damping force of the rear suspension 30, but the suspension controller 63 may be configured to change only one of the damping force of the front fork 20 and the damping force of the rear suspension 30.

The front fork 20 is an example of an electronically controlled front suspension, but the front suspension is not limited to the front fork 20. The front suspension is not limited to a front suspension including a telescopic type mechanism, but may be a front suspension including a telelever type mechanism.

The straddled vehicle is a vehicle that a rider straddles to ride. The straddled vehicle is not limited to the motorcycle 1. The straddled vehicle may be, for example, a motor tricycle, an all-terrain vehicle (ATV), a snowmobile, or the like.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. Specification and drawings should be regarded as providing preferred embodiments of the present invention. These preferred embodiments are provided with the understanding that they are not intended to limit the present invention to the preferred embodiments described in the specification and/or shown in the drawings. The present invention is not limited to the preferred embodiment described herein, but can be modified within the scope of the appended claims.

### Reference Signs List

1 motorcycle (straddled vehicle), 6 internal combustion engine (drive source), 8 front wheel, 8B front wheel brake, 9 rear wheel, 9B rear wheel brake, 10 vehicle body frame, 20 front fork (front suspension), 22 radar (preceding vehicle detection device), 23 vehicle speed sensor, 24 acceleration sensor, 30 rear suspension, 60 control device, 61 traveling controller, 63 suspension controller, 63B suspension control prohibitor, 64 storage

## Claims

1. A straddled vehicle (1) comprising:
a vehicle body frame (10);
a front wheel (8) supported by the vehicle body frame (10);
a rear wheel (9) supported by the vehicle body frame (10);
a front wheel brake (8B) that brakes the front wheel (8);
a rear wheel brake (9B) that brakes the rear wheel (9);
a drive source (6) that is supported by the vehicle body frame (10) and drives the rear wheel (9);
an electronically controlled front suspension (20) connected to the vehicle body frame (10) and the front wheel (8);
an electronically controlled rear suspension (30) connected to the vehicle body frame (10) and the rear wheel (9); and
a control device (60) connected to the front wheel brake (8B), the rear wheel brake (9B), the drive source (6), the front suspension (20), and the rear suspension (30),
wherein
the control device (60) includes
a traveling controller (61) that executes cruise control by controlling at least one of the front wheel brake (8B), the rear wheel brake (9B), and the drive source (6), and
a suspension controller (63) that, when the traveling controller (61) accelerates or decelerates the straddled vehicle (1) during the cruise control, control at least one of a damping force of the front suspension (20), a spring reaction force of the front suspension (20), a damping force of the rear suspension (30), and a spring reaction force of the rear suspension (30);
wherein
the suspension controller (63) is configured to, when the traveling controller (61) accelerates the straddled vehicle (1) during the cruise control, increase a damping force of the front suspension (20) in an expansion direction and/or a damping force of the rear suspension (30) in a contraction direction;
an accelerator operator (16A) that is supported by the vehicle body frame (10) and is operated by a rider,
**characterized in that**
the control device (60) includes a suspension control prohibitor (63B) that prohibits control of the suspension controller (63) when the accelerator operator (16A) is operated.

2. The straddled vehicle (1) according to claim 1, further comprising:
a preceding vehicle detection device (22) that is supported by the vehicle body frame (10) and detects an inter-vehicle distance from a preceding vehicle,
wherein
the control device (60) is connected to the preceding vehicle detection device (22), and
the traveling controller (61) is configured to execute cruise control in which the straddled vehicle (1) is caused to follow the preceding vehicle while keeping a set inter-vehicle distance from the preceding vehicle by controlling at least one of the front wheel brake (8B), the rear wheel brake (9B), and the drive source (6), based on a detection value of the preceding vehicle detection device (22).

3. The straddled vehicle (1) according to claim 1 or 2,
wherein
the suspension controller (63) is configured to, when the traveling controller (61) accelerates the straddled vehicle (1) during the cruise control, cause the damping force of the front suspension (20) in the expansion direction and/or the damping force of the rear suspension (30) in the contraction direction to increase as an acceleration of the straddled vehicle (1) increases.

4. The straddled vehicle (1) according to claim 2,
wherein
the traveling controller (61) is configured to calculate a target acceleration of the straddled vehicle (1), based on the inter-vehicle distance detected by the preceding vehicle detection device (22) and, when the acceleration of the straddled vehicle (1) is lower than the target acceleration, increase an output of the drive source (6), and
the suspension controller (63) is configured to increase the damping force of the front suspension (20) in the expansion direction and/or the damping force of the rear suspension (30) in the contraction direction in accordance with the target acceleration before the output of the drive source (6) is increased.

5. The straddled vehicle (1) according to claim 4,
wherein
the control device (60) includes a storage (64) that stores a map defining a relationship between the target acceleration and the damping force of the front suspension (20) in the expansion direction and/or the damping force of the rear suspension (30) in the contraction direction, and
the suspension controller (63) is configured to increase the damping force of the front suspension (20) in the expansion direction and/or the damping force of the rear suspension (30) in the contraction direction, based on the map.

6. The straddled vehicle (1) according to any one of the foregoing claims,
wherein
the suspension controller (63) is configured to, when the traveling controller (61) accelerates the straddled vehicle (1) during the cruise control, reduce the spring reaction force of the front suspension (20) and/or increase the spring reaction force of the rear suspension (30).

7. The straddled vehicle (1) according to any one of the foregoing claims,
wherein
the suspension controller (63) is configured to, when the traveling controller (61) decelerates the straddled vehicle (1) during the cruise control, increase the damping force of the front suspension (20) in the contraction direction and/or the damping force of the rear suspension (30) in the expansion direction.

8. The straddled vehicle (1) according to claim 7,
wherein
the suspension controller (63) is configured to, when the traveling controller (61) decelerates the straddled vehicle (1) during the cruise control, cause the damping force of the front suspension (20) in the contraction direction and/or the damping force of the rear suspension (30) in the expansion direction to increase as a deceleration of the straddled vehicle increases.

9. The straddled vehicle (1) according to claim 2,
wherein
the traveling controller (61) is configured to calculate a target deceleration of the straddled vehicle (1), based on the inter-vehicle distance detected by the preceding vehicle detection device (22) and, when a deceleration of the straddled vehicle (1) is lower than the target deceleration, execute a deceleration operation including at least one of increasing the braking force of the front wheel brake (8B) and/or the rear wheel brake (9B) and reducing the output of the drive source (6), and
the suspension controller (63) is configured to increase the damping force of the front suspension (20) in the contraction direction and/or the damping force of the rear suspension (30) in the expansion direction in accordance with the target deceleration before the deceleration operation is started.

10. The straddled vehicle (1) according to claim 7,
wherein
the control device (60) includes a storage (64) that stores a map defining a relationship between the target deceleration and the damping force of the front suspension (20) in the contraction direction and/or the damping force of the rear suspension (30) in the expansion direction, and
the suspension controller (63) is configured to increase the damping force of the front suspension (20) in the contraction direction and/or the damping force of the rear suspension (30) in the expansion direction, based on the map.

11. The straddled vehicle (1) according to any one of the foregoing claims,
wherein
the suspension controller (63) is configured to, when the traveling controller (61) decelerates the straddled vehicle (1) during the cruise control, increase the spring reaction force of the front suspension (20) and/or reduce the spring reaction force of the rear suspension (30).

## Patentansprüche

1. Spreizsitz-Fahrzeug (1), das umfasst:
einen Fahrzeug-Karosserierahmen (10);
ein Vorderrad (8), das von dem Fahrzeug-Karosserierahmen (10) getragen wird;
ein Hinterrad (9), das von dem Fahrzeug-Karosserierahmen (10) getragen wird;
eine Vorderradbremse (8B), die das Vorderrad (8) bremst;
eine Hinterradbremse (9B), die das Hinterrad (9) bremst;
eine Antriebsquelle (6), die von dem Fahrzeug-Karosserierahmen (10) getragen wird und das Hinterrad (9) antreibt;
eine elektronisch gesteuerte vordere Aufhängung (20), die mit dem Fahrzeug-Karosserierahmen (10) und dem Vorderrad (8) verbunden ist;
eine elektronisch gesteuerte hintere Aufhängung (30), die mit dem Fahrzeug-Karosserierahmen (10) und dem Hinterrad (9) verbunden ist; sowie
eine Steuerungsvorrichtung (60), die mit der Vorderradbremse (8B), der Hinterradbremse (9B), der Antriebsquelle (6), der vorderen Aufhängung (20) sowie der hinteren Aufhängung (30) verbunden ist,
wobei
die Steuerungsvorrichtung (60) einschließt:
eine Fahrt-Regelungseinrichtung (61), die automatische Geschwindigkeitsregelung ausführt, indem sie die Vorderradbremse (8B), die Hinterradbremse (9B) sowie die Antriebsquelle (6) steuert, und
eine Aufhängungs-Steuerungseinrichtung (63), die, wenn die Fahrt-Regelungseinrichtung (61) das Spreizsitz-Fahrzeug (1) während der automatischen Geschwindigkeitsregelung beschleunigt oder abbremst, eine Dämpfkraft der vorderen Aufhängung (20), eine Feder-Reaktionskraft der vorderen Aufhängung (20), eine Dämpfkraft der hinteren Aufhängung (30) oder/und eine Feder-Reaktionskraft der hinteren Aufhängung (30) steuert;
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung beschleunigt, eine Dämpfkraft der vorderen Aufhängung (20) in einer Ausfahr-Richtung und/oder eine Dämpfkraft der hinteren Aufhängung (30) in einer Einfahr-Richtung verstärkt;
eine Gaspedal-Betätigungseinrichtung (16A), die von dem Fahrzeug-Karosserierahmen (10) getragen wird und von einem Fahrer betätigt wird,
**dadurch gekennzeichnet, dass**
die Steuerungsvorrichtung (60) eine Einrichtung (63B) zum Verhindern von Aufhängungs-Steuerung einschließt, die Steuerung der Aufhängung-Steuerungseinrichtung (63) verhindert, wenn die Gaspedal-Betätigungseinrichtung (16A) betätigt wird.

2. Spreizsitz-Fahrzeug (1) nach Anspruch 1, das des Weiteren umfasst:
eine Vorrichtung (22) für Erfassung eines vorausfahrenden Fahrzeugs, die von dem Fahrzeug-Karosserierahmen (10) getragen wird und einen Fahrzeugabstand zu einem vorausfahrenden Fahrzeug erfasst,
wobei
die Steuerungsvorrichtung (60) mit der Vorrichtung (22) für Erfassung eines vorausfahrenden Fahrzeugs verbunden ist, und
die Fahrt-Regelungseinrichtung (61) so ausgeführt ist, dass sie automatische Geschwindigkeitsregelung ausführt, bei der das Spreizsitz-Fahrzeug (1) veranlasst wird, dem vorausfahrenden Fahrzeug zu folgen und dabei einen eingestellten Fahrzeugabstand zu dem vorausfahrenden Fahrzeug einzuhalten, indem sie die Vorderradbremse (8B), die Hinterradbremse (9B) oder/und die Antriebsquelle (6) auf Basis eines Erfassungswertes der Vorrichtung (22) für Erfassung eines vorausfahrenden Fahrzeugs steuert.

3. Spreizsitz-Fahrzeug (1) nach Anspruch 1 oder 2,
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung beschleunigt, veranlasst, dass die Dämpfkraft der vorderen Aufhängung (20) in der Ausfahr-Richtung und oder die Dämpfkraft der hinteren Aufhängung (30) in der Einfahr-Richtung zunimmt, wenn eine Beschleunigung des Spreizsitz-Fahrzeugs (1) zunimmt.

4. Spreizsitz-Fahrzeug (1) nach Anspruch 2,
wobei
die Fahrt-Regelungseinrichtung (61) so ausgeführt ist, dass sie eine Ziel-Beschleunigung des Spreizsitz-Fahrzeugs (1) auf Basis des durch die Vorrichtung (22) für Erfassung eines vorausfahrenden Fahrzeugs erfassten Fahrzeugabstandes berechnet, und, wenn die Beschleunigung des Spreizsitz-Fahrzeugs (1) unter der Ziel-Beschleunigung liegt, eine Ausgangsleistung der Antriebsquelle (6) erhöht, und
die Aufhängungs-Steuerungseinrichtung (63) so ausgeführt ist, dass sie die Dämpfkraft der vorderen Aufhängung (20) in der Ausfahr-Richtung und/oder die Dämpfkraft der hinteren Aufhängung (30) in der Einfahr-Richtung entsprechend der Ziel-Beschleunigung verstärkt, bevor die Ausgangsleistung der Antriebsquelle (6) erhöht wird.

5. Spreizsitz-Fahrzeug (1) nach Anspruch 4,
wobei
die Steuerungsvorrichtung (60) einen Speicher (64) einschließt, der ein Kennfeld speichert, dass eine Beziehung zwischen der Ziel-Beschleunigung und der Dämpfkraft der vorderen Aufhängung (20) in der Ausfahr-Richtung und/oder die Dämpfkraft der hinteren Aufhängung (30) in der Einfahr-Richtung speichert, und
die Aufhängungs-Steuerungseinrichtung (63) so ausgeführt ist, dass sie die Dämpfkraft der vorderen Aufhängung (20) in der Ausfahr-Richtung und/oder die Dämpfkraft der hinteren Aufhängung (30) in der Einfahr-Richtung auf Basis des Kennfeldes verstärkt.

6. Spreizsitz-Fahrzeug (1) nach einem der vorangehenden Ansprüche,
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung beschleunigt, die Feder-Reaktionskraft der vorderen Aufhängung (20) reduziert und/oder die Feder-Reaktionskraft der hinteren Aufhängung (30) verstärkt.

7. Spreizsitz-Fahrzeug (1) nach einem der vorangehenden Ansprüche,
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung abbremst, die Dämpfkraft der vorderen Aufhängung (20) in der Einfahr-Richtung und/oder die Dämpfkraft der hinteren Aufhängung (30) in der Ausfahr-Richtung verstärkt.

8. Spreizsitz-Fahrzeug (1) nach Anspruch 7,
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung abbremst, bewirkt, dass die Dämpfkraft der vorderen Aufhängung (20) in der Einfahr-Richtung und/oder die Dämpfkraft der hinteren Aufhängung (30) in der Ausfahr-Richtung stärker wird, wenn eine Abbremsung des Spreizsitz-Fahrzeugs stärker wird.

9. Spreizsitz-Fahrzeug (1) nach Anspruch 2,
wobei
die Fahrt-Regelungseinrichtung (61) so ausgeführt ist, dass sie eine Ziel-Abbremsung des Spreizsitz-Fahrzeugs (1) auf Basis des durch die Vorrichtung (22) für Erfassung eines vorausfahrenden Fahrzeugs erfassten Fahrzeugabstandes berechnet, und, wenn eine Abbremsung des Spreizsitz-Fahrzeugs (1) unter der Ziel-Beschleunigung liegt, eine Abbrems-Betätigung ausführt, die Verstärken der Bremskraft der Vorderradbremse (8B) und/oder der Hinterradbremse (9B) oder/und Reduzieren der Ausgangsleistung der Antriebsquelle (6) einschließt,
die Aufhängungs-Steuerungseinrichtung (63) so ausgeführt ist, dass sie die Dämpfkraft der vorderen Aufhängung (20) in der Einfahr-Richtung und/oder die Dämpfkraft der hinteren Aufhängung (30) in der Ausfahr-Richtung entsprechend der Ziel-Beschleunigung verstärkt, bevor die Abbrems-Betätigung in Gang gesetzt wird.

10. Spreizsitz-Fahrzeug (1) nach Anspruch 7,
wobei
die Steuerungsvorrichtung (60) einen Speicher (64) einschließt, der ein Kennfeld speichert, das eine Beziehung zwischen der Ziel-Beschleunigung und der Dämpfkraft der vorderen Aufhängung (20) in der Einfahr-Richtung und/oder die Dämpfkraft der hinteren Aufhängung (30) in der Ausfahr-Richtung definiert, und
die Aufhängungs-Steuerungseinrichtung (63) so ausgeführt ist, dass sie die Dämpfkraft der vorderen Aufhängung (20) in der Einfahr-Richtung und/oder die Dämpfkraft der hinteren Aufhängung (30) in der Ausfahr-Richtung auf Basis des Kennfeldes verstärkt.

11. Spreizsitz-Fahrzeug (1) nach einem der vorangehenden Ansprüche,
wobei
die Aufhängungs-Steuerungseinrichtung (63) so ausgeführt ist, dass sie, wenn die Fahrt-Regelungseinrichtung (61) das Spreizsitz-Fahrzeug (1) während der automatischen Geschwindigkeitsregelung abbremst, die Feder-Reaktionskraft der vorderen Aufhängung (20) verstärkt und/oder die Feder-Reaktionskraft der hinteren Aufhängung (30) abschwächt.

## Revendications

1. Véhicule à selle (1) comprenant :
un châssis de carrosserie (10) ;
une roue avant (8) supportée par le châssis de carrosserie (10) ;
une roue arrière (9) supportée par le châssis de carrosserie (10) ;
un frein de roue avant (8B) qui freine la roue avant (8) ;
un frein de roue arrière (9B) qui freine la roue arrière (9) ;
une source d'entraînement (6) qui est supportée par le châssis de carrosserie (10) et qui entraîne la roue arrière (9) ;
une suspension avant à commande électronique (20) reliée au châssis de carrosserie (10) et à la roue avant (8) ;
une suspension arrière à commande électronique (30) reliée au châssis de carrosserie (10) et à la roue arrière (9) ; et
un dispositif de commande (60) relié au frein de roue avant (8B), au frein de roue arrière (9B), à la source d'entraînement (6), à la suspension avant (20) et à la suspension arrière (30),
dans lequel
le dispositif de commande (60) comprend
une unité de commande de déplacement (61) qui exécute une régulation de vitesse en commandant au moins l'un du frein de roue avant (8B), du frein de roue arrière (9B) et de la source d'entraînement (6), et
une unité de commande de suspension (63) qui, lorsque l'unité de commande de déplacement (61) accélère ou décélère le véhicule à selle (1) pendant la régulation de vitesse, commande au moins l'une d'une force d'amortissement de la suspension avant (20), d'une force de réaction de ressort de la suspension avant (20), d'une force d'amortissement de la suspension arrière (30) et d'une force de réaction de ressort de la suspension arrière (30) ;
dans lequel
l'unité de commande de suspension (63) est configurée pour, lorsque l'unité de commande de déplacement (61) accélère le véhicule à selle (1) pendant la régulation de vitesse, augmenter une force d'amortissement de la suspension avant (20) dans une direction d'expansion et/ou une force d'amortissement de la suspension arrière (30) dans une direction de contraction ;
un actionneur d'accélérateur (16A) qui est supporté par le châssis de carrosserie (10) et qui est actionné par un conducteur,
**caractérisé en ce que**
le dispositif de commande (60) comprend un dispositif d'interdiction de commande de suspension (63B) qui interdit la commande de l'unité de commande de suspension (63) lorsque l'actionneur d'accélérateur (16A) est actionné.

2. Véhicule à selle (1) selon la revendication 1, comprenant en outre :
un dispositif de détection de véhicule précédent (22) qui est supporté par le châssis de carrosserie (10) et détecte une distance inter-véhicules par rapport à un véhicule précédent,
dans lequel
le dispositif de commande (60) est relié au dispositif de détection de véhicule précédent (22), et
l'unité de commande de déplacement (61) est configurée pour exécuter une régulation de vitesse dans laquelle le véhicule à selle (1) est amené à suivre le véhicule précédent tout en conservant une distance inter-véhicules définie par rapport au véhicule précédent en commandant au moins l'un du frein de roue avant (8B), du frein de roue arrière (9B) et de la source d'entraînement (6), sur la base d'une valeur de détection du dispositif de détection de véhicule précédent (22).

3. Véhicule à selle (1) selon la revendication 1 ou 2, dans lequel
l'unité de commande de suspension (63) est configurée pour, lorsque l'unité de commande de déplacement (61) accélère le véhicule à selle (1) pendant la régulation de vitesse, provoquer l'augmentation de la force d'amortissement de la suspension avant (20) dans la direction d'expansion et/ou de la force d'amortissement de la suspension arrière (30) dans la direction de contraction à mesure qu'une accélération du véhicule à selle (1) augmente.

4. Véhicule à selle (1) selon la revendication 2,
dans lequel
l'unité de commande de déplacement (61) est configurée pour calculer une accélération cible du véhicule à selle (1), sur la base de la distance inter-véhicules détectée par le dispositif de détection de véhicule précédent (22) et, lorsque l'accélération du véhicule à selle (1) est inférieure à l'accélération cible, augmenter une sortie de la source d'entraînement (6), et
l'unité de commande de suspension (63) est configurée pour augmenter la force d'amortissement de la suspension avant (20) dans la direction d'expansion et/ou la force d'amortissement de la suspension arrière (30) dans la direction de contraction conformément à l'accélération cible avant que la sortie de la source d'entraînement (6) ne soit augmentée.

5. Véhicule à selle (1) selon la revendication 4,
dans lequel
le dispositif de commande (60) comprend une mémoire (64) qui stocke une carte définissant une relation entre l'accélération cible et la force d'amortissement de la suspension avant (20) dans la direction d'expansion et/ou la force d'amortissement de la suspension arrière (30) dans la direction de contraction, et
l'unité de commande de suspension (63) est configurée pour augmenter la force d'amortissement de la suspension avant (20) dans la direction d'expansion et/ou la force d'amortissement de la suspension arrière (30) dans la direction de contraction, sur la base de la carte.

6. Véhicule à selle (1) selon l'une quelconque des revendications précédentes,
dans lequel
l'unité de commande de suspension (63) est configurée pour, lorsque l'unité de commande de déplacement (61) accélère le véhicule à selle (1) pendant la régulation de vitesse, réduire la force de réaction de ressort de la suspension avant (20) et/ou augmenter la force de réaction de ressort de la suspension arrière (30).

7. Véhicule à selle (1) selon l'une quelconque des revendications précédentes,
dans lequel
l'unité de commande de suspension (63) est configurée pour, lorsque l'unité de commande de déplacement (61) décélère le véhicule à selle (1) pendant la régulation de vitesse, augmenter la force d'amortissement de la suspension avant (20) dans la direction de contraction et/ou la force d'amortissement de la suspension arrière (30) dans la direction d'expansion.

8. Véhicule à selle (1) selon la revendication 7,
dans lequel
l'unité de commande de suspension (63) est configurée pour, lorsque l'unité de commande de déplacement (61) décélère le véhicule à selle (1) pendant la régulation de vitesse, provoquer l'augmentation de la force d'amortissement de la suspension avant (20) dans la direction de contraction et/ou de la force d'amortissement de la suspension arrière (30) dans la direction d'expansion à mesure qu'une décélération du véhicule à selle augmente.

9. Véhicule à selle (1) selon la revendication 2,
dans lequel
l'unité de commande de déplacement (61) est configurée pour calculer une décélération cible du véhicule à selle (1), sur la base de la distance inter-véhicules détectée par le dispositif de détection de véhicule précédent (22) et, lorsqu'une décélération du véhicule à selle (1) est inférieure à la décélération cible, exécuter une opération de décélération comprenant au moins l'une parmi l'augmentation de la force de freinage du frein de roue avant (8B) et/ou du frein de roue arrière (9B) et la réduction de la sortie de la source d'entraînement (6), et
l'unité de commande de suspension (63) est configurée pour augmenter la force d'amortissement de la suspension avant (20) dans la direction de contraction et/ou la force d'amortissement de la suspension arrière (30) dans la direction d'expansion conformément à la décélération cible avant le début de l'opération de décélération.

10. Véhicule à selle (1) selon la revendication 7,
dans lequel
le dispositif de commande (60) comprend une mémoire (64) qui stocke une carte définissant une relation entre la décélération cible et la force d'amortissement de la suspension avant (20) dans la direction de contraction et/ou la force d'amortissement de la suspension arrière (30) dans la direction d'expansion, et
l'unité de commande de suspension (63) est configurée pour augmenter la force d'amortissement de la suspension avant (20) dans la direction de contraction et/ou la force d'amortissement de la suspension arrière (30) dans la direction d'expansion, sur la base de la carte.

11. Véhicule à selle (1) selon l'une quelconque des revendications précédentes,
dans lequel
l'unité de commande de suspension (63) est configurée pour, lorsque l'unité de commande de déplacement (61) décélère le véhicule à selle (1) pendant la régulation de vitesse, augmenter la force de réaction de ressort de la suspension avant (20) et/ou réduire la force de réaction de ressort de la suspension arrière (30).
